# EUROPÄISCHE PATENTANMELDUNG

(11) **EP 0 570 616 A1**
(43) Veröffentlichungstag der Anmeldung: **24.11.1993**
(21) Anmeldenummer: 92109774.7
(22) Anmeldetag: 10.06.1992
(51) Int. Cl.: B29B 17/02, B29K 21/00

(54) **Verfahren zum Zerkleinern, vorzugsweise von Altreifen und Vorrichtung hierfür**

(30) Priorität: 21.05.1992 DE 4216863
(71) Anmelder: JACOBS MASCHINENBAU GmbH, D-46325 Borken (DE)
(72) Erfinder: Jacobs, Heinrich, W-4284 Heiden (DE)
(74) Vertreter: Herrmann-Trentepohl, Werner, Dipl.-Ing.

(57) **Zusammenfassung**

Die Erfindung betrifft ein Verfahren zum Zerkleinern von Zerkleinerungsgut, vorzugsweise von Altreifen, wobei das Zerkleinerungsgut einer Zerkleinerungsvorrichtung zugeführt wird, in der das Zerkleinerungsgut zu Granulat zerkleinert wird. Um eine sichere Zuführung des Zerkleinerungsgutes zur Zerkleinerungseinrichtung zu gewährleisten und gleichzeitig einen ausgezeichneten Zerkleinerungsgrad zu erzielen, ist vorgesehen, daß das Zerkleinerungsgut einer in Umfangsrichtung verschließbaren Kammer (19) zugeführt wird, daß das in der Kammer (19) befindliche Zerkleinerungsgut in axialer Richtung der Kammer (19) komprimiert wird, daß das Zerkleinerungsgut durch die Kompression in eine sich an die Kammer (19) anschließende sich verjüngende Matrize (36) und aus einer Ausdrücköffnung (38) der Matrize (36) herausgepreßt wird und daß das Zerkleinerungsgut nach Austritt aus der Matrize (36) von einer Zerkleinerungseinrichtung zu Granulat zerkleinert wird.

## Beschreibung

Die Erfindung bezieht sich auf ein Verfahren zum Zerkleinern von Zerkleinerungsgut, vorzugsweise von Altreifen, wobei das Zerkleinerungsgut einer Zerkleinerungsvorrichtung zugeführt wird, in der das Zerkleinerungsgut zu Granulat zerkleinert wird sowie auf eine Vorrichtung zur Durchführung des Verfahrens.

Das bei der Erfindung zu zerkleinernde Gut besteht aus einem Rohstoff oder aus mehreren Rohstoffen, welche erhebliche Zerkleinerungsenergie voraussetzen, um damit ein Rohstoffgranulat zu gewinnen. Das gilt insbesondere für elastomere Rohstoffe bzw. für ein Zerkleinerungsgut, das hauptsächlich solche Rohstoffe enthält. Elastomere Rohstoffe verzehren aufgrund ihrer Entropieelastizität Zerkleinerungsenergie in nennenswertem Umfang, bevor sich Granulat aus dem festen Verband löst. Daher ist das erfindungsgemäße Verfahren sowie die Vorrichtung hierfür insbesondere für die mechanische Zerkleinerung von Altreifen geeignet und vorgesehen.

Altreifen sind Abfälle des Straßenverkehrs und fallen im wesentlichen als Pkw- und Lkw-Altreifen in beträchtlicher Menge an. Nur der kleinere Teil der anfallenden Menge wird in der Regel regeniert oder runderneuert. Der größere Teil muß deponiert werden. Durch bekannte Zerkleinerungsverfahren wird die Rückgewinnung der in den Altreifen enthaltenen Rohstoffe ermöglicht, da die Altreifen zu einem Granulat zerkleinert werden, daß sich auch stofflich trennen läßt.

Altreifen bestehen im Prinzip aus dem tragenden Unterbau, der sogenannten Karkasse, der profilierten Lauffläche und den Wülsten mit vorzugsweise aus Draht bestehenden Einlagen, die eine radiale Dehnung des Reifens verhindern und dadurch den festen Sitz des Reifens auf der Felge herbeiführen.

Das Rohmaterial der Altreifen besteht zum überwiegenden Teil aus Polymer und bei Lkw- und Pkw-Altreifen aus unterschiedlichen Anteilen von Natur- und Synthesekautschuk. Den Rest bilden relativ große Anteile von Stahl und geringe Anteile textiler Rohstoffe an Pkw-Reifen, während Lkw-Reifen im allgemeinen keine textilen Rohstoffe enthalten.

Die Erfindung geht von einem Zerkleinerungsverfahren und einer Zerkleinerungsvorrichtung aus, wie sie aus der DE-OS 37 04 725 bekannt sind. Bei der bekannten Zerkleinerungsmaschine wird ein Altreifen durch eine aus Rollen bestehende Zuführungseinrichtung einem Spalt zugeführt, an den sich ein Zerkleinerungswerk anschließt, durch welches der Reifen zu Granulat verarbeitet wird.

Allerdings hat es sich bei dieser bekannten Vorrichtung gezeigt, daß immer wieder Schwierigkeiten bei der Zuführung des Reifens zum Zerkleinerungswerk auftreten. Da der Reifen bei der Zuführung seitlich nicht geführt wird, kann es vorkommen, daß der Reifen insgesamt oder zumindest ein Bereich des Reifens außer Eingriff mit den Zuführungsrollen kommt und hierdurch nur ein Teil des Reifens granuliert wird. Desweiteren hat es sich gezeigt, daß mit der bekannten Vorrichtung zwar bereits ein recht feines Granulat erzeugt werden kann. Um das Granulat jedoch in nachfolgenden Bearbeitungsgängen in einfacher Weise, z.B. mit Magnetscheidern, zu separieren, ist ein verbesserter Zerkleinerungsgrad erforderlich.

Aufgabe der Erfindung ist es, ein Verfahren und eine Vorrichtung zum Zerkleinern zur Verfügung zu stellen, wobei die Nachteile des Standes der Technik vermieden werden, und eine sichere Zuführung des Zerkleinerungsgutes zur Zerkleinerungseinrichtung gewährleistet wird. Gleichzeitig soll ein ausgezeichneter Zerkleinerungsgrad gewährleistet sein.

Diese Aufgabe wird bei dem erfindungsgemäßen Verfahren im wesentlichen durch die Merkmale des Anspruchs 1 gelöst. Erfindungsgemäß ist vorgesehen, daß das Zerkleinerungsgut einer in Umfangsrichtung geschlossenen oder verschließbaren Kammer zugeführt wird. Anschließend wird das in der Kammer befindliche Zerkleinerungsgut in axialer Richtung der Kammer komprimiert. Daraufhin wird das Zerkleinerungsgut durch die Kompression in eine sich an die Kammer anschließende Matrize und aus einer Ausdrücköffnung der Matrize herausgepreßt. Schließlich wird das Zerkleinerungsgut vorzugsweise unmittelbar nach Austritt aus der Matrize von einer Zerkleinerungseinrichtung zu Granulat zerkleinert.

Die Erfindung bietet eine Reihe von wesentlichen Vorteilen gegenüber dem bekannten Verfahren. Ist das Zerkleinerungsgut der Kammer zugeführt, so ist eine sichere Zuführung des Zerkleinerungsgutes zur Zerkleinerungseinrichtung gewährleistet, da der Reifen, einmal in die Kammer eingeführt, aus dieser nicht mehr heraus kann und auf diese Weise sicher geführt ist. Durch die Anordnung in der geschlossenen Kammer ist auch sichergestellt, daß der ganze Reifen zu Granulat verarbeitet wird und nicht nur Teile des Reifens. In der Kammer findet eine Kompression des Zerkleinerungsgutes dadurch statt, daß auf der einen Seite der Kammer Druck auf das Zerkleinerungsgut ausgeübt wird, während sich an dem anderen Ende der Kammer eine Matrize anschließt, welche den lichten Querschnitt der Kammer verringert. Durch diese Verringerung des lichten Querschnitts findet bereits während des Kompressionsvorganges in der Kammer eine gewisse Zerkleinerung des Zerkleinerungsgutes (sog. Vorzerkleinerung) statt. Verläßt das komprimierte Zerkleinerungsgut die Matrize durch die Ausdrücköffnung, so läßt sich das austretende, bereits vorzerkleinerte Gut hervorragend durch die Zerkleinungseinrichtung schneiden. Durch die Kompression des an sich elastischen Zerkleinerungsgutes nimmt dieses nämlich Eigenschaften an, die üblicherweise harte, spröde Materialien haben. Aufgrund dieser durch die Kompression geänderten Eigenschaften des Reifens beim Austritt aus der Ausdrücköffnung kann ein sehr feines Granulat erzeugt werden, welches in folgenden Bearbeitungsgängen leicht separiert werden kann.

In Weiterbildung dieses Erfindungsgedankens ist vorgesehen, daß das Zerkleinerungsgut vor und/oder bei Zuführung in die Kammer in einer Richtung senkrecht zur Kompressionsrichtung komprimiert wird. Eine derartige Maßnahme hat den Vorteil, daß die Abmessungen bzw. der Querschnitt der Kammer durch die genannte Kompression entsprechend verringert werden kann. Dementsprechend kann auch die Kompressionseinrichtung bzw. die Druckfläche der Kompressionseinrichtung kleiner ausgebildet sein, so daß ein entsprechend höherer Druck aufgebracht werden kann.

Die erfindungsgemäße Zerkleinerungsvorrichtung weist zur Lösung der o.g. Aufgabe eine in Umfangsrichtung verschließbare Kammer auf, die zur Aufnahme des Zerkleinerungsgutes in der Vorrichtung vorgesehen ist. Desweiteren ist eine Kompressionseinrichtung mit einem Kolben vorgesehen, wobei der Kolben in die Kammer einführbar und in der Kammer zum Komprimieren und Ausdrücken des Zerkleinerungsgutes verschiebbar ist. Gegenüberliegend der Kompressionseinrichtung befindet sich eine Matrize, deren lichter Durchmesser sich zur Ausdrücköffnung hin verringert. Schließlich befindet sich im Anschluß an die Ausdrücköffnung der Matrize eine Zerkleinerungseinrichtung, welche das Zerkleinerungsgut zu einem Granulat zerkleinert. Auf die bei dem erfindungsgemäßen Verfahren verwirklichten Vorteile, die mit dieser beschriebenen Vorrichtung erreicht werden, sei an dieser Stelle hingewiesen.

In Weiterbildung der Zerkleinerungsvorrichtung ist vorgesehen, daß die Zerkleinerungsvorrichtung eine etwa rechtwinklig zur Kompressionsrichtung der Kompressionseinrichtung wirkende Zuführeinrichtung mit einem Preßteil aufweist. Das Preßteil führt das Zerkleinerungsgut der Kammer zu, wobei die auf das Zerkleinerungsgut wirkende Fläche des Preßteils einen Teil der Kammer darstellt und diese nach oben hin verschließt. Durch das auf das Zerkleinerungsgut wirkende Preßteil wird sichergestellt, daß das Zerkleinerungsgut in einfacher Weise der Kammer zugeführt wird. Der Einfachheit halber und aus konstruktionstechnischen Gründen bietet es sich dabei an, daß das Preßteil selbst einen Teil der Kammer darstellt bzw. die Kammer nach Zuführung des Zerkleinerungsgutes verschließt.

Der weiteren Verbesserung der Zuführung des Zerkleinerungsgutes in die Kammer dient es, wenn ein Zuführschacht vorgesehen ist, in welchen das Zerkleinerungsgut zunächst eingeführt wird. In diesem Zuführschacht wird das Zerkleinerungsgut auf seinem Weg in die Kammer geführt und kann nicht aus diesem heraus, da das Preßteil den Zuführschacht von oben schließt, während das untere Ende des Zuführschachtes den Boden der Kammer bildet. Somit ist eine exakte Zuführung des Zerkleinerungsgutes über das Preßteil in den Zuführschacht bis in die Kammer hinein möglich. Im übrigen versteht es sich, daß das untere Ende des Zuführschachtes in die Kammer direkt übergeht.

Da beim Komprimieren des Zerkleinerungsgutes in der Kammer enorme Kräfte auftreten und das Preßteil als separates Teil in dem Zuführschacht bewegbar ist, bietet es sich an, wenn das Preßteil in Verschlußstellung der Kammer über eine Arretiereinrichtung feststellbar ist, so daß eine Fixierung des Preßteils während der Kompression sichergestellt ist. Dabei hat es sich als besonders vorteilhaft erwiesen, wenn die Feststellung über eine Keilarretierung durch einen Kegeldorn erfolgt.

Um das manuelle Einführen beispielsweise eines Altreifens in die Zerkleinerungsvorrichtung zu erleichtern, weist die Zuführeinrichtung vorteilhafter Weise einen schwenkbaren Aufnahmetisch auf, auf den der Altreifen aufgelegt wird. Nach Verschwenken bzw. Hochschwenken des Aufnahmetisches befindet sich der Altreifen bereits in dem Zuführschacht, da der Aufnahmetisch zusammen mit einer gegenüberliegenden Platte zumindest einen Teil des Zuführschachtes bildet.

Um das Zuführen des Altreifens in den Zuführschacht weiter zu erleichtern und um gleichzeitig die erste Kompression im Zuführschacht auf den Altreifen auszuüben, ist der Aufnahmetisch vorzugsweise über wenigstens eine Kolben-Zylindereinheit in Schwenkrichtung des Tisches druckbelastbar.

Einer vorzeitigen Beschädigung der Kolbendruckfläche einerseits und auch möglicherweise eine Beschädigung der Kompressionseinrichtung wird dadurch vorgebeugt, daß an der dem Zerkleinerungsgut zugewandten Fläche des Kolbens eine Verschleißplatte befestigt ist, die im wesentlichen spielfrei in der Kammer verschiebbar ist. Die Spielfreiheit gewährleistet, daß während der Kompression eines Reifens kein Zerkleinerungsgut an der Verschleißplatte vorbei und aus der Kammer heraus gelangt.

Zum Schutz der Matrize bzw. des der Ausdrücköffnung benachbarten Bereichs der Matrize und auch zur Gewährleistung einer guten Zerkleinerung des Zerkleinerungsgutes ist eine in die Ausdrücköffnung mündende Gegenschneide vorzugsweise aus Hartmetall vorgesehen. An der Gegenschneide schert das Zerkleinerungsgut unter Wirkung der Zerkleinerungseinrichtung gezielt ab, was in einem sehr feinen Zerkleinerungsgut und einer langen Standzeit der Matrize resultiert.

Wenn der Übergang der Ausdrücköffnung bzw. der Gegenschneide zur Zerkleinerungseinrichtung etwa spaltfrei ist, wird ein besonders feines Granulat gewonnen. Da sich zum einen die Gegenschneide und zum anderen die Zerkleinerungseinrichtung bzw. deren Werkzeuge beim Zerkleinern des Zerkleinerungsgutes verschleißen und dabei der Abstand zwischen Zerkleinerungseinrichtung und Gegenschneide vergrößert wird, bietet es sich an, wenn die Gegenschneide und/oder die Zerkleinerungseinrichtung nachstellbar ausgebildet sind/ist, so daß im wesentlichen immer ein spaltfreier Übergang erzielt werden kann.

Desweiteren kann vorgesehen sein, daß der Durchgang durch die Matrize sich verjüngt und mehrere konische und zylindrische Abschnitte aufweist. Eine derartige Anordnung der Matrize bietet sich deshalb an, da die zylindrischen Abschnitte in der Matrize dafür sorgen, daß das Material, welches bei einem Arbeitsgang nicht aus der Matrize ausgedrückt werden kann, sondern in dieser verbleibt, nach Rückgang des Kolbens der Kompressionseinrichtung nicht in die Kammer zurückfällt und dadurch die Zuführung eines nachfolgenden Altreifens möglicherweise behindert. Bei Versuchen hat es sich als besonders vorteilhaft erwiesen, wenn insgesamt sechs Abschnitte vorgesehen sind, wobei auch gewährleistet sein sollte, daß die Übergänge der Abschnitte zueinander abgerundet sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und anhand der Zeichnung selbst.

Es zeigen:
- Fig. 1: eine Vorderansicht der erfindungsgemäßen Zerkleinerungsvorrichtung,
- Fig. 2: einen Schnitt durch die erfindungsgemäße Vorrichtung aus Fig. 1,
- Fig. 3: eine Seitenansicht der Zerkleinerungsvorrichtung aus Fig. 1,
- Fig. 4: eine geschnittene Darstellung einer Matrize und
- Fig. 5: eine Ansicht der Matrize in Pfeilrichtung V aus Fig. 4.

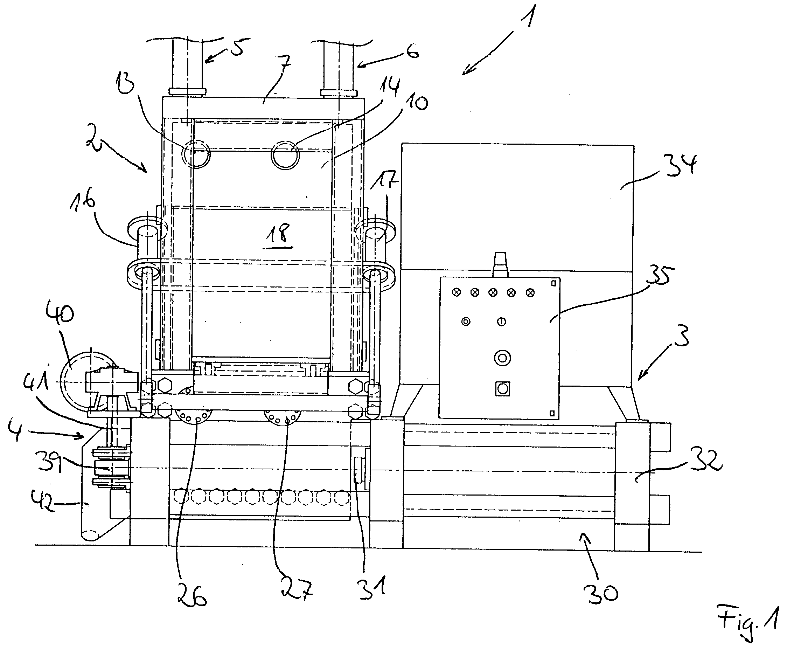

Die in den Figuren 1 bis 3 dargestellte Zerkleinerungsvorrichtung 1 weist eine Zuführeinrichtung 2, eine Kompressionseinrichtung 3 sowie eine Zerkleinerungseinrichtung 4 auf.

Die Zuführeinrichtung 2 ist mit zwei Kolben-Zylinder-Einheiten 5, 6 versehen, welche auf einem Rahmen 7 angeordnet sind, der etwa die Form eines auf dem Kopof stehenden "U" aufweist. Die Kolben-Zylinder-Einheiten 5, 6 werden hydraulisch betrieben und wirken in vertikaler Richtung. An den Kolben 8, 9 der Einheiten 5, 6 ist ein Preßteil 10 befestigt, welches entlang den äußeren Schenkeln 11, 12 des Rahmens 7 geführt ist. Hierzu sind die Schenkel 11, 12 ebenfalls mit einem U-Profil versehen, so daß das Preßteil 10 in den Schenkeln 11, 12 geführt werden kann. Das Preßteil weist weiterhin zwei durchgehende Bohrungen 13, 14 auf.

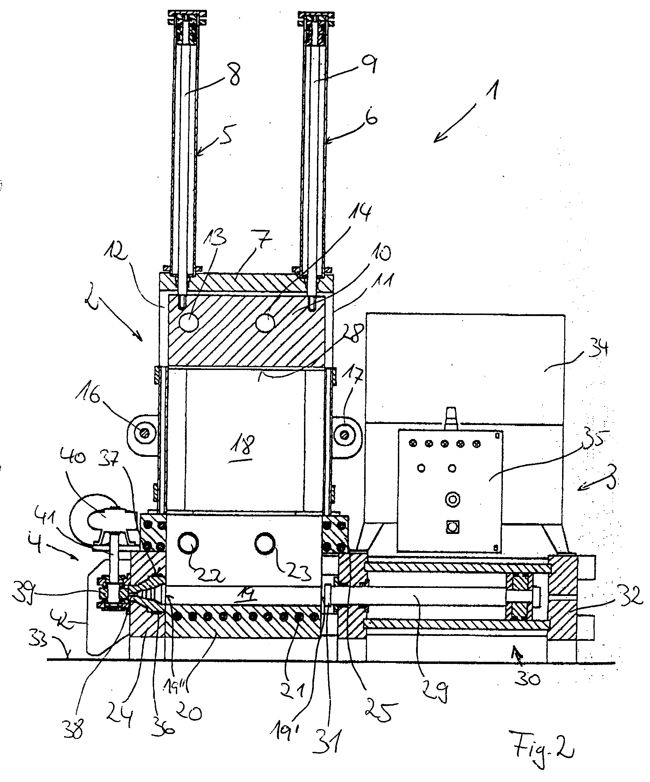

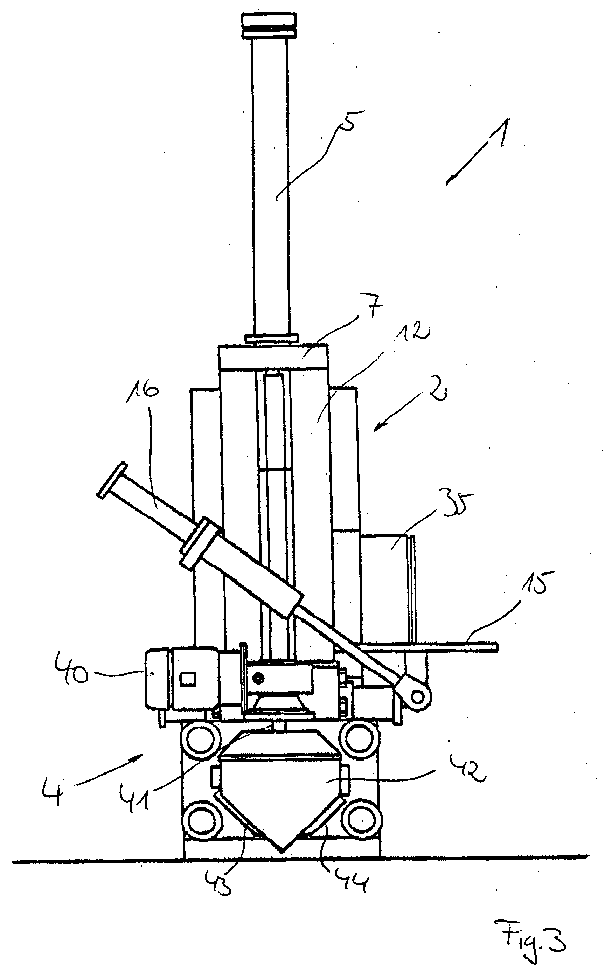

Desweiteren ist die Zuführeinrichtung 2 mit einem Aufnahmetisch 15 versehen, was insbesondere aus Fig. 3 ersichtlich ist. Der Aufnahmetisch 15 ist drehbar am Rahmen 7 befestigt. An seinen seitlichen Kanten ist der Aufnahmetisch 15 jeweils mit einer Kolben-Zylinder-Einheit 16, 17 verbunden, so daß auf diese Weise der Aufnahmetisch bewegt und geschwenkt werden kann. Die Kolben-Zylinder-Einheiten 16, 17 arbeiten ebenfalls hydraulisch. Sowohl die Befestigung der Einheiten 16, 17 am Aufnahmetisch 15 als auch am Rahmen 7 ist drehbeweglich, da eine Drehbewegung der Einheiten 16, 17 beim Hochschwenken des Aufnahmetisches 15 erforderlich ist. Gegenüberliegend dem hochgeschwenkten Aufnahmetisch 15 befindet sich eine fest mit dem Rahmen verbundene Platte 18, die insbesondere aus Fig. 2 ersichtlich ist. Die Platte 18 erstreckt sich von dem einen äußeren Schenkel 11 zu dem anderen äußeren Schenkel 12 und ist an diesen jeweils befestigt. Bei hochgeschwenktem Aufnahmetisch 15 ergibt sich somit zwischen den äußeren Schenkeln 11, 12, dem Aufnahmetisch 15 und der Platte 18 ein nicht näher dargestellter Zuführschacht. Der Zuführschacht reicht bis in eine Kammer 19, welche die untere Begrenzung des Zuführschachtes darstellt. Die Kammer 19 ist in zwei Preßkammerteilen 20 ausgebildet, von denen in Fig. 2 lediglich eines dargestellt ist. Beide Preßkammerteile 20 sind in diesem Ausführungsbeispiel über zehn Schrauben 21 fest miteinander verschraubt. Desweiteren sind beide Preßkammerteile jeweils mit zwei Bohrungen 22, 23 versehen, welche in Größe und Anordnung den Bohrungen 13, 14 im Preßteil 10 entsprechen. Insgesamt sind beide Preßkammerteile 20 in einem Lagerblock 24 gelagert.

Der obere Rahmen 7 ist ebenfalls an dem Lagerblock 24 befestigt, während ein Rahmenteil 25 das obere Ende der Preßkammerteile 20 umgibt. In dem Rahmenteil 25 befinden sich vier (nur zwei sind dargestellt) hydraulisch betriebene Arretierzylinder 26, 27, deren Kolben durch die Bohrungen 22, 23 und 13, 14 zur Arretierung des Preßteils 10 in seiner unteren Stellung gebracht werden können. Die Arretierung erfolgt vorzugsweise durch einen Kegeldorn, was jedoch nicht näher dargestellt ist.

Bei der Kammer 19 handelt es sich um einen zylindrischen Hohlkörper in den Preßkammerteilen 20, der nach oben hin grundsätzlich offen ist. Der Verschluß der oberen Öffnung der Kammer 19 wird durch die untere Fläche 28 des Preßteils 10 gebildet wird. Dementsprechend weist diese Fläche 28 des Preßteils 10 eine der Form der Kammer profilierte, in diesem Fall kreisbogenförmig ausgeschnittene Form auf. Im heruntergefahrenen Zustand des Preßteils 10 wird somit die Kammer 19 nach oben hin spielfrei geschlossen.

Benachbart der einen axialen Öffnung 19' der Kammer 19 befindet sich ein Kolben 29 der Kompressionseinheit 3. Der Kolben 29 ist Teil einer Kolben-Zylinder-Einheit 30, die hydraulisch betrieben wird. An der vorderen Stirnfläche des Kolbens 29 befindet sich eine Verschleißplatte 31, welche den Abmaßen der Kammer 19 entspricht und spielfrei in dieser geführt werden kann. Die Kolben-Zylinder-Einheit 30 ist in einem Lagerrahmen 32 gelagert, der ebenso wie der Lagerblock 24 auf dem Boden 33 aufsteht. Oberhalb des Lagerrahmens 32 befindet sich ein Öltank 34 sowie ein Hydraulik-Steueraggregat 35 zur Versorgung und Steuerung der hydraulisch betriebenen Einheiten.

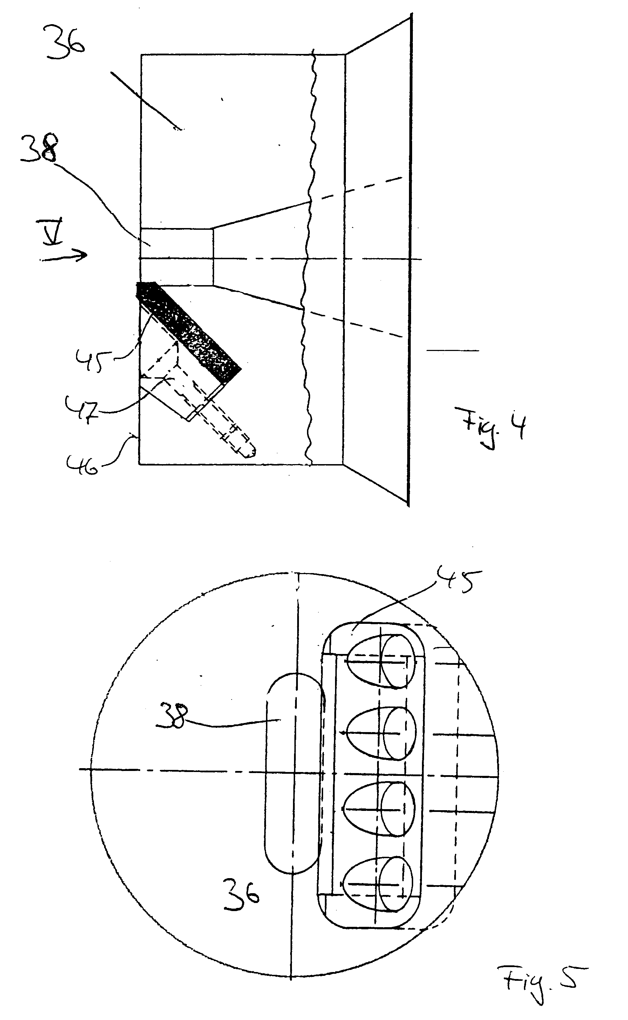

An die andere axiale Öffnung 19'' der Kammer 19 schließt sich unmittelbar eine Matrize 36 an. Die Matrize 36 ist in einer entsprechenden Patrize 37 im Lagerblock 24 gelagert. Die Matrize 36 verjüngt sich von der Kammer 19 ausgehend zu einer Ausdrücköffnung 38 hin, was insbesondere auch aus Fig. 4 ersichtlich ist. In Fig. 4 ist jedoch nicht dargestellt, daß die Verjüngung zur Ausdrücköffnung 38 derart erfolgt, daß abwechselnd ein zylindrischer und anschließend ein konischer Bereich vorgesehen ist, während die Übergänge vom zylindrischen auf den konischen Bereich jeweils abgerundet sind. Insgesamt sind bis zur Ausdrücköffnung 38 drei konische und drei zylindrische Bereiche vorgesehen, was aus Fig. 2 ersichtlich ist. Bezüglich der wechselnden Bereiche stellt die Matrize aus Fig. 4 eine Alternativlösung zur Matrize aus Fig. 2 dar.

Unmittelbar an die Ausdrücköffnung 38 der Matrize 36 schließt sich das Schneidwerk 39 der Zerkleinerungseinrichtung 4 an. Das Schneidwerk 39 wird über einen Elektromotor 40 betrieben. Der Motor 40 und das Schneidwerk 39 sind über eine Drehwelle 41 miteinander verbunden. Statt des Elektromotors 40 kann selbstverständlich auch ein Hydraulik- oder Pneumatikmotor vorgesehen sein. Das Schneidwerkzeug 39 wird von einem Schneckengehäuse 42 umgeben, welches Öffnungen 43, 44 aufweist. Das Schneidwerk weist einen nicht näher dargestellten Schneidkopf auf, dessen Mantelfäche gehärtet ist. Der Schneidkopf ist mit einer Anzahl von Schneiden versehen, die ebenfalls aus einem gehärteten Material bestehen. Bei den Schneiden kann es sich um Rundplättchen aus Hartmetall handeln, die eine relativ hohe Standzeit haben.

In den Figuren 4 und 5 ist die Matrize 36 dargestellt. In die Ausdrücköffnung 38 der Matrize 36 ragt eine Gegenschneide 45, die im übrigen zum Schutz der Matrize vor vorzeitigem Verschleiß auch über die Außenfläche 46 der Matrize 36 geringfügig übersteht. Die Gegenschneide 45 ist im Beispielsfalle über 4 Schrauben 47 an der Matrize 36 befestigt.

Der Abstand der Matrize 36 bzw. der äußersten Spitze der Gegenschneide 45 von den Schneiden des Schneidwerks 39 ist etwa spielfrei. Dementsprechend ist die Gegenschneide oder das Schneidwerk oder Gegenschneide und Schneidwerk nachstellbar ausgebildet, was jedoch nicht ersichtlich ist.

Das erfindungsgemäße Verfahren läuft nun wie folgt ab:
Ein zu zerkleinernder bzw. zu granulierender Altreifen wird horizontal auf den Aufnahmetisch 15 gelegt. Nach Betätigen der Kolben-Zylinder-Einheiten 16, 17 schwenkt der Aufnahmetisch 15 in seine obere Stellung und führt den Altreifen in den nicht näher bezeichneten Zuführschacht. Gleichzeitig findet eine erste Kompression des Reifens in Schwenkrichtung des Aufnahmetisches 15 bzw. im Zuführschacht statt. Hierdurch ist der Reifen in dem Zuführschacht gehalten und hat im übrigen keine Möglichkeit mehr, aus dem Zuführschacht herauszukommen. Nachdem der Reifen in dem Zuführschacht gehalten ist, werden die Kolben-Zylinder-Einheiten 5, 6 betätigt, wodurch das Preßteil 10 herabbewegt wird und mit seiner unteren Fläche 28 auf den Reifen drückt. Durch den Druck des Preßteils 10 wird der Reifen entlang dem Zuführschacht verschoben und bis in die Kammer 19 hinabgedrückt. Die Abwärtsbewegung des Preßteils 10 erfolgt so lange, bis die untere Fläche 28 bündig mit der Innenkontur der Kammer 19 ist bzw. in diese übergeht. Dies kann über ein entsprechende Steuerung der Einheiten 5, 6 oder über einen Anschlag für das Preßteil bei Erreichen der Verschlußstellung der Kammer 19 erreicht werden. Desweiteren verriegeln die vier Arretiereinrichtungen 26, 27 das Preßteil 10. Die Kammer 19 ist nun nach oben hin geschlossen. Daraufhin wird die Kompressionseinrichtung 3 betätigt und der Kolben 29 wird in die eine axiale Öffnung 19' der Kammer 19 eingeführt. Hierbei wirkt die Verschleißplatte 31 auf den in der Kammer 19 befindlichen Reifen und drückt diesen in Richtung auf die Matrize 36. Spätestens wenn der Reifen in den sich verjüngenden Bereich der Matrize 36 gelangt, findet eine Kompression statt. Eine gewisse Kompression findet selbstverständlich bereits vor Erreichen der Matrize aufgrund der in der Kammer 19 auftretenden Reibkraft statt.

Aufgrund der Verjüngung in der Matrize 36 findet bereits hier eine erste Zerkleinerung des Altreifens statt. Die Kompression des Kolbens 29 bzw. die Ausdrückgeschwindigkeit ist auf die mögliche Zerkleinerungsgeschwindigkeit der Zerkleinerungseinrichtung 4 abgestimmt. Jedenfalls erfolgt die Kompression so lange, bis der Kolben bzw. die Verschleißplatte 31 das Ende der Kammer 19 erreicht hat bzw. an der Matrize anstößt. Das aus der Matrize austretende Material wird aufgrund der Spaltfreiheit zwischen Matrize 36 und Schneidwerkzeugen des Schneidwerks erfaßt und zu einem Granulat zerkleinert. Die Gegenschneide, die sich in Drehrichtung des Schneidwerks an die Ausdrücköffnung 38 anschließt, verhindert ein frühzeitiges Verschleißen bzw. Vergrößern der Ausdrücköffnung 38. Das Schneckengehäuse 42 verhindert ein unkontrolliertes Wegschleudern des Granulats und garantiert durch die Öffnungen 43, 44, über die entsprechende Behälter oder Sicke gestülpt werden können, ein einfaches Abziehen des Granulats.

Nachdem der Kolben 29 den Altreifen aus der Kammer 19 herausgedrückt hat, wird der Kolben 29 in seine Ausgangsstellung, die beispielsweise in Fig. 2 dargestellt ist, zurückbewegt. Gleichzeitig wird die Kammer 19 nach oben hin geöffnet, indem das Preßteil 10 in seine, in Fig. 2 dargestellte obere Stellung zurückfährt. Durch die besondere Ausbildung der Matrize 36 mit zylindrischen und konischen Übergängen wird ein Zurückspringen bzw. Zurückfallen des noch in der Matrize befindlichen Materials verhindert. Gleichzeitig wird der Aufnahmetisch in seine in Fig. 3 dargestellte horizontale Stellung gefahren, so daß der nächste Altreifen darauf plaziert und verarbeitet werden kann.

### Bezugszeichenliste

- 1: Zerkleinerungsvorrichtung
- 2: Zuführeinrichtung
- 3: Kompressionseinrichtung
- 4: Zerkleinerungseinrichtung
- 5: Kolben-Zylinder-Einheit
- 6: Kolben-Zylinder-Einheit
- 7: Rahmen
- 8: Kolben
- 9: Kolben
- 10: Preßteil
- 11: äußerer Schenkel
- 12: äußerer Schenkel
- 13: Bogen
- 14: Bogen
- 15: Aufnahmetisch
- 16: Kolben-Zylinder-Einheit
- 17: Kolben-Zylinder-Einheit
- 18: Platte
- 19: Kammer
- 19': Öffnung
- 19'': Öffnung
- 20: Preßkammerteil
- 21: Schrauben
- 22: Bohrungen
- 23: Bohrungen
- 24: Lagerblock
- 25: Rahmenteil
- 26: Arretierzylinder
- 27: Arretierzylinder
- 28: Fläche
- 29: Kolben
- 30: Kolben-Zylinder-Einheit
- 31: Verschleißplatte
- 32: Lagerrahmen
- 33: Boden
- 34: Öltank
- 35: Hydraulik-Steuer-Aggregat
- 36: Matrize
- 37: Patrize
- 38: Ausdrücköffnung
- 39: Schneidwerk
- 40: Elektromotor
- 41: Drehwelle
- 42: Schneckengehäuse
- 43: Öffnung
- 44: Öffnung
- 45: Gegenschneide
- 46: Außenfläche
- 47: Schrauben

## Patentansprüche

1. Verfahren zum Zerkleinern von Zerkleinerungsgut, vorzugsweise von Altreifen, wobei das Zerkleinerungsgut einer Zerkleinerungsvorrichtung zugeführt wird, in der das Zerkleinerungsgut zu Granulat zerkleinert wird,
dadurch gekennzeichnet,
daß das Zerkleinerungsgut einer in Umfangsrichtung verschließbaren Kammer (19) zugeführt wird,
daß das in der Kammer (19) befindliche Zerkleinerungsgut in axialer Richtung der Kammer (19) komprimiert wird,
daß das Zerkleinerungsgut durch die Kompression in eine sich an die Kammer (19) anschließende sich verjüngende Matrize (36) und aus einer Ausdrücköffnung (38) der Matrize (36) herausgepreßt wird und
daß das Zerkleinerungsgut nach Austritt aus der Matrize (36) von einer Zerkleinerungseinrichtung (4) zu Granulat zerkleinert wird.

2. Verfahren nach Anspruch 1, dadurch gekennzeichnet, daß das Zerkleinerungsgut vor und/oder bei Zuführung in die Kammer (19) in einer Richtung senkrecht zur Kompressionsrichtung komprimiert wird.

3. Zerkleinerungsvorrichtung zum Zerkleinern von Zerkleinerungsgut, vorzugsweise von Altreifen, insbesondere zur Durchführung des Verfahrens nach den Ansprüchen 1 und 2, mit einer Zerkleinerungseinrichtung,
dadurch gekennzeichnet,
daß in der Vorrichtung (1) eine in Umfangsrichtung verschließbare Kammer (19) zur Aufnahme des Zerkleinerungsgutes ausgebildet ist,
daß eine Kompressionseinrichtung (3) mit einem Kolben (29) vorgesehen ist, wobei der Kolben (29) in die eine axiale Öffnung (19') der Kammer (19) einführbar und in der Kammer (19) zum Komprimieren und Ausdrücken des Zerkleinerungsgutes verschiebbar ist,
daß im Anschluß an die andere axiale Öffnung (19'') der Kammer (19) eine sich verjüngende Matrize (36) mit Ausdrücköffnung (38) angeordnet ist und
daß die Zerkleinerungseinrichtung (4) im Anschluß an die Ausdrücköffnung (38) der Matrize (36) angeordnet ist.

4. Vorrichtung nach Anspruch 3, dadurch gekennzeichnet, daß eine etwa rechtwinklig zur Kompressionsrichtung der Kompressionseinrichtung wirkende Zuführeinrichtung (2) mit einem Preßteil (10) vorgesehen ist, wobei das Preßteil (10) das Zerkleinerungsgut der Kammer zuführt und die auf das Zerkleinerungsgut wirkende Fläche (28) einen Teil der Kammer (19) darstellt.

5. Vorrichtung nach Anspruch 3 oder 4, dadurch gekennzeichnet, daß das Preßteil in einem Zuführschacht bewegbar ist, der über das Preßteil (10) verschließbar ist, wobei der Boden des Zuführschachtes den Boden der Kammer (19) bildet.

6. Vorrichtung nach einem oder mehreren der Ansprüche 3 bis 5, dadurch gekennzeichnet, daß das Preßteil (10) in Verschlußstellung der Kammer (19) über eine Arretiereinrichtung (26, 27) vorzugsweise über eine Keilarretierung mit Kegeldorn feststellbar ist.

7. Vorrichtung nach einem oder mehreren der Ansprüche 3 bis 6, dadurch gekennzeichnet, daß die Zuführeinrichtung (2) einen schwenkbaren Aufnahmetisch (15) für das Zerkleinerungsgut aufweist, wobei der auf- bzw. hochgeschwenkte Aufnahmetisch (15) zusammen mit einer gegenüberliegenden Platte (18) zumindest einen Teil des Zuführschachtes bildet.

8. Vorrichtung nach Anspruch 7, dadurch gekennzeichnet, daß der Aufnahmetisch (15) vorzugsweise über wenigstens eine Kolben-Zylinder-Einheit (16, 17) in Schwenkrichtung druckbelastbar ist.

9. Vorrichtung nach einem oder mehreren der Ansprüche 3 bis 8, dadurch gekennzeichnet, daß an der dem Zerkleinerungsgut zugewandten Fläche des Kolbens (29) eine Verschleißplatte (31) befestigt ist, die im wesentlichen spielfrei in der Kammer (19) verschiebbar ist.

10. Vorrichtung nach einem oder mehreren der Ansprüche 3 bis 9, dadurch gekennzeichnet, daß eine in die Ausdrücköffnung (38) mündende Gegenschneide (45) vorzugsweise aus Hartmetall vorgesehen ist.

11. Vorrichtung nach einem oder mehreren der Ansprüche 3 bis 10, dadurch gekennzeichnet, daß der Übergang der Ausdrücköffnung (38) bzw. der Gegenschneide (45) zur Zerkleinerungseinrichtung (4) etwa spaltfrei ist.

12. Vorrichtung nach einem oder mehreren der Ansprüche 3 bis 11, dadurch gekennzeichnet, daß die Gegenschneide (45) und/oder die Zerkleinerungseinrichtung (4) nachstellbar ausgebildet ist/sind.

13. Vorrichtung nach einem oder mehreren der Ansprüche 3 bis 12, dadurch gekennzeichnet, daß der Durchgang durch die Matrize (36) sich verjüngende konische und zylindrische Abschnitte aufweist, wobei vorzugsweise sechs Abschnitte vorgesehen sind und die Übergänge der Abschnitte abgerundet sind.
